# EUROPEAN PATENT SPECIFICATION

(11) **EP 3 660 349 B1**
(45) Date of publication and mention of the grant of the patent: **08.04.2026**
(21) Application number: 19212356.0
(22) Date of filing: 28.11.2019
(51) Int. Cl.: F16F 9/34, F16F 9/50

(54) **ACTIVE VALVE FOR AN INTERNAL BYPASS**
AKTIVES VENTIL FÜR EINEN INTERNEN BYPASS
VALVE ACTIVE POUR DÉRIVATION INTERNE

(30) Priority: 28.11.2018 US 201816203203
(43) Date of publication of application: 03.06.2020
(73) Proprietor: Fox Factory, Inc., Braselton, GA 30517 (US)
(72) Inventor: MARKING, John, El Cajon, CA 92021 (US); ERICKSEN, Everet Owen, CA 95062 (US); O'NEAL, George, Scotts Valley, CA 95066 (US); McLELLAN, Matt, Fremont, CA 94538 (US)
(74) Representative: Greaves Brewster LLP

(56) References cited:
- EP-A2- 2 410 203
- RU-C1- 2 469 224
- US-A- 5 295 563
- US-A1- 2016 076 617

## Description

### FIELD OF THE INVENTION

Embodiments of the present technology generally relate to a damper assembly for a vehicle. More specifically, certain embodiments relate to a remotely operated bypass valve used in conjunction with a vehicle damper.

### BACKGROUND

Vehicle suspension systems typically include a spring component or components and a damping component or components. Typically, mechanical springs, like helical springs are used with some type of viscous fluid-based damping mechanism and the two are mounted functionally in parallel. In some instances, features of the damper or spring are user-adjustable. What is needed is an improved method and apparatus for adjusting damping characteristics, including remote adjustment.

US 5,295,563 discloses a vehicle suspension damper according to the preamble of claim 1.

### SUMMARY OF EMBODIMENTS

Embodiments include a vehicle suspension damper that comprises: a cylinder and a piston assembly, wherein the piston assembly includes a piston; a working fluid within the cylinder; a bypass cylinder surrounding the cylinder and defining a cylindrical bypass channel; an adjustable bypass port fluidly coupling an interior of the cylinder and the cylindrical bypass channel; and an active bypass valve coupled with the cylindrical bypass channel, the active bypass valve configured to adjust a working size of the adjustable bypass port to modify a flow of said working fluid through the adjustable bypass port.

Embodiments also include: active bypass valve for operation within a vehicle suspension damper, the active bypass valve comprising: a threaded plug coupled with an actuator arm, wherein the threaded plug is configured for being angularly displaced within a cylindrical bypass channel about a longitudinal axis of the threaded plug relative to a piston in response to movement of the actuator arm, wherein the cylindrical bypass channel is defined by a bypass cylinder surrounding a cylinder of the vehicle suspension damper; a rod disposed adjacent to the threaded plug, wherein the rod is configured for moving along the longitudinal axis within the cylindrical bypass channel in response to an angular displacement experienced by the threaded plug; and a sleeve disposed adjacent to the rod, wherein the sleeve is configured for moving along the longitudinal axis within the cylindrical bypass channel in response to the moving by the rod, wherein the sleeve provides an adjustment to a flow of a working fluid through an adjustable bypass port fluidly coupling an interior of the cylinder and the cylindrical bypass channel.

In some embodiments there is provided a vehicle suspension damper which may comprise a cylinder and a piston assembly. The piston assembly may comprise a piston. There may be a working fluid within said cylinder. A bypass cylinder may surround said cylinder and define a cylindrical bypass channel. An active bypass valve may be coupled with said cylindrical bypass channel, and said active bypass valve may be configured to meter a fluid flow of said working fluid through said cylindrical bypass channel.

In some embodiments said working fluid may travel through said cylindrical bypass channel from one side of said piston to another side of said piston at a first flow rate when said active bypass valve is in an open position.

In some embodiments said working fluid may travel through said cylindrical bypass channel from one side of said piston to another side of said piston at a second flow rate when said active bypass valve is in a partially open position,

In some embodiments the second flow rate of said working fluid may be less than said first flow rate of said working fluid.

In some embodiments it may be that none of said working fluid travels through said cylindrical bypass channel from one side of said piston to another side of said piston when said active bypass valve is in a closed position.

In some embodiments the damper may further comprise an adjustable bypass port fluidly coupling an interior of said cylinder and said cylindrical bypass channel. The active bypass valve may further comprise an actuator arm. There maty be a threaded plug coupled with said actuator arm, wherein said threaded plug is configured for being angularly displaced within said cylindrical bypass channel about a longitudinal axis of said threaded plug relative to said piston in response to an operation of said actuator arm.

In some embodiments said active bypass valve may further comprise a rod disposed adjacent to said threaded plug. The rod may be configured for moving along said longitudinal axis within said cylindrical bypass channel in response to an angular displacement experienced by said threaded plug.

In some embodiments said active bypass valve may further comprise a sleeve coupled to said rod and extending from said rod along the same longitudinal axis as said rod. The sleeve may be configured for moving along said longitudinal axis within said cylindrical bypass channel in response to said moving by said rod. The sleeve may provide an adjustment to a working size of said adjustable bypass port.

In some embodiments the damper may further comprise a control system coupled to said active bypass valve. The control system may comprise a sensor to obtain vehicle acceleration sensor data associated with a movement of a vehicle component of a vehicle. The control system may also comprise a comparer to compare a value of said vehicle acceleration sensor data with a predetermined acceleration threshold value that corresponds to said vehicle component. The control system may further comprise an active bypass valve monitor to monitor a state of said active bypass valve, wherein said state controls a damping force within said vehicle suspension damper. The control system may also comprise an activation signal provider to, based on said comparing and said monitoring, actuate said active bypass valve to meter the flow of said working fluid through said cylindrical bypass channel, such that a damping characteristic of said vehicle suspension damper is modified.

In some embodiments there is provided a vehicle suspension damper that may comprise a cylinder and a piston assembly. The piston assembly may comprise a piston having a first side and a second side. The piston may include a flow path formed through said piston. There may be a working fluid within said cylinder. A bypass cylinder may surround said cylinder and define a cylindrical bypass channel. The cylindrical bypass channel may provide a path for said working fluid to travel from said first side of said piston to said second side of said piston without traversing said flow path formed through said piston. An active bypass valve may be coupled with said cylindrical bypass channel. The active bypass valve may have a flow path therethrough. The active bypass valve may be adapted to meter a flow of said working fluid through said cylindrical bypass channel.

In some embodiments an amount of said working fluid may travel through said cylindrical bypass channel from said first side of said piston to said second side of said piston when said active bypass valve is in an open position.

In some embodiments a lesser amount of said working fluid may travel through said cylindrical bypass channel from said first side of said piston to said second side of said piston when said active bypass valve is in a partially open position.

In some embodiments it may be that none of said working fluid travels through said cylindrical bypass channel from said first side of said piston to said second side of said piston when said active bypass valve is in a closed position.

In some embodiments the damper may further comprise a control system coupled to said active bypass valve. The control system may comprise a sensor to obtain a vehicle acceleration sensor data associated with a movement of a vehicle component of said vehicle. A comparer may be adapted to compare a value of said vehicle acceleration sensor data with a predetermined acceleration threshold value that corresponds to said vehicle component. An active bypass valve may be adapted to monitor a state of said active bypass valve, wherein said state controls a damping force within said vehicle suspension damper. An activation signal provider may be adapted to, based on said comparing and said monitoring, actuate said active bypass valve to meter the flow of said working fluid through said cylindrical bypass channel, such that a damping characteristic of said vehicle suspension damper is modified.

In some embodiments the damper may further comprise a fluid conduit. It may further comprise a reservoir cylinder in fluid communication with the cylinder via the fluid conduit. The reservoir cylinder may receive and supply the working fluid as the piston assembly moves in and out of the cylinder.

In some embodiments the reservoir cylinder may be in fluid communication with a rebound portion of the cylinder via the fluid conduit.

In some embodiments there is provided a vehicle suspension damper which may comprise a cylinder and a piston assembly. The piston assembly may comprise a piston having a first side and a second side, said piston including a flow path formed through said piston. There may be a working fluid within said cylinder. A bypass cylinder may surround said cylinder and define a cylindrical bypass channel. The cylindrical bypass channel may provide a path for said working fluid to travel from said first side of said piston to said second side of said piston without traversing said flow path formed through said piston. An active bypass valve may be coupled with said cylindrical bypass channel. The active bypass valve may have a flow path therethrough. The active bypass valve may be adapted to meter a flow of said working fluid through said cylindrical bypass channel. A reservoir cylinder may be in fluid communication with a rebound portion of the cylinder via a fluid conduit. The reservoir cylinder may be adapted to receive and supply the working fluid as the piston assembly moves in and out of the cylinder. An active valve may be coupled with said fluid conduit. The active valve may have a flow path therethrough. The active valve may meter a flow of said working fluid through said fluid conduit.

In some embodiments a first amount of said working fluid may travel through said cylindrical bypass channel from said first side of said piston to said second side of said piston when said active bypass valve is in an open position. It may also be that none of said working fluid travels through said cylindrical bypass channel from said first side of said piston to said second side of said piston when said active bypass valve is in a closed position.

In some embodiments a lesser amount of said working fluid may travel through said cylindrical bypass channel from said first side of said piston to said second side of said piston when said active bypass valve is in a partially open position.

In some embodiments the damper may further comprise a control system coupled to said active bypass valve. The control system may comprise a sensor to obtain a vehicle acceleration sensor data associated with a movement of a vehicle component of said vehicle. The damper may further comprise a comparer to compare a value of said vehicle acceleration sensor data with a predetermined acceleration threshold value that corresponds to said vehicle component. The damper may further comprise an active bypass valve may be adapted to monitor to monitor a state of said active bypass valve, wherein said state controls a damping force within said vehicle suspension damper. An activation signal provider may be adapted to, based on said comparing and said monitoring, actuate said active bypass valve to meter the flow of said working fluid through said cylindrical bypass channel, such that a damping characteristic of said vehicle suspension damper is modified.

In some embodiments the damper may further comprise a control system coupled to said active valve. The control system may comprise a sensor to obtain a vehicle acceleration sensor data associated with a movement of a vehicle component of said vehicle. The control system may comprise a comparer adapted to compare a value of said vehicle acceleration sensor data with a predetermined acceleration threshold value that corresponds to said vehicle component. The control system may further comprise an active valve adapted to monitor a state of said active valve, wherein said state controls a damping force within said vehicle suspension damper. The control system may further comprise an activation signal provider adapted to, based on said comparing and said monitoring, actuate said active valve to meter the flow of said working fluid through said fluid conduit, such that a damping characteristic of said vehicle suspension damper is modified.

In some embodiments there is also provided a vehicle comprising a vehicle suspension damper as aforesaid, or as set out in the appended claims, or as described anywhere herein.

### BRIEF DESCRIPTION OF THE DRAWINGS

So that the manner in which the above recited features can be understood in detail, a more particular description may be had by reference to embodiments, some of which are illustrated in the appended drawings. It is to be noted, however, that the appended drawings illustrate only typical embodiments of this invention and are therefore into to be considered limiting of its scope, for the invention may admit to other equally effective embodiments.
FIG. 1 is a section view showing a vehicle suspension damper with a bypass, in accordance with an embodiment.
FIG. 2A is an enlarged section view showing an active bypass valve, in accordance with an embodiment.
FIG. 2B is an enlarged section view showing an active bypass valve in a second configuration, in accordance with an embodiment.
FIG. 3A is a section view showing a vehicle suspension damper with an active bypass valve and a reservoir, in accordance with an embodiment.
FIG. 3B is a section view showing a vehicle suspension damper with an active bypass valve having a second configuration and a reservoir, in accordance with an embodiment.
FIG. 4 is a schematic diagram showing a control arrangement for a remotely-operated bypass valve, in accordance with an embodiment.
FIG. 5 is a schematic diagram of a control system based upon any or all of vehicle speed, damper rod speed, and damper rod position, in accordance with an embodiment.
FIG. 6 is an enlarged section view showing an active bypass valve and a plurality of valve operating cylinders in selective communication with an annular piston surface of the valve, in accordance with an embodiment.

The drawings referred to in this description should be understood as not being drawn to scale except if specifically noted.

### DESCRIPTION OF EMBODIMENTS

The detailed description set forth below in connection with the appended drawings is intended as a description of various embodiments of the present invention and is not intended to represent the only embodiments in which the present invention may be practiced. Each embodiment described in this disclosure is provided merely as an example or illustration of the present invention, and should not necessarily be construed as preferred or advantageous over other embodiments. In some instances, well known methods, procedures, objects, and circuits have not been described in detail as not to unnecessarily obscure aspects of the present disclosure.

### Overview of Discussion

Embodiments disclosed herein provide a damping mechanism for a vehicle suspension damper in which a bypass cylinder surrounds a cylinder of the vehicle suspension damper, thereby defining a cylindrical bypass channel. An adjustable bypass port fluidly couples the interior of the cylinder with the cylindrical bypass channel. An active bypass valve functions within the cylindrical bypass channel to meter the flow of working fluid (or damping fluid) from the interior of the cylinder, through the adjustable bypass port leading to the cylindrical bypass channel, and ultimately to a rebound portion of the cylinder. In some embodiments, the active bypass valve operates in conjunction with other damping mechanisms integrated within the vehicle suspension damper.

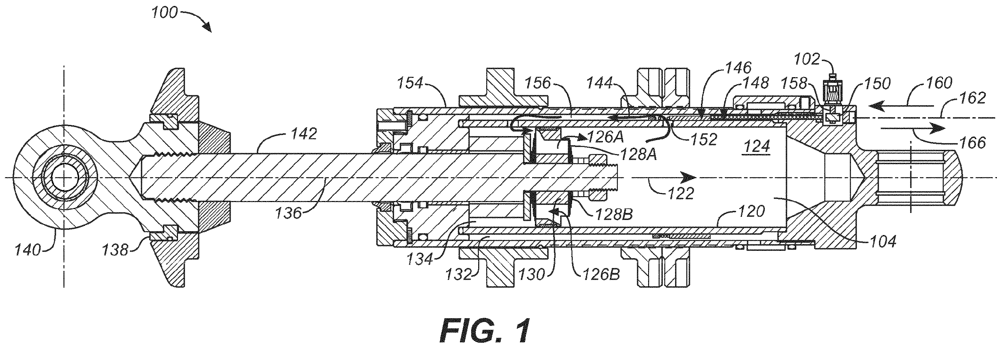

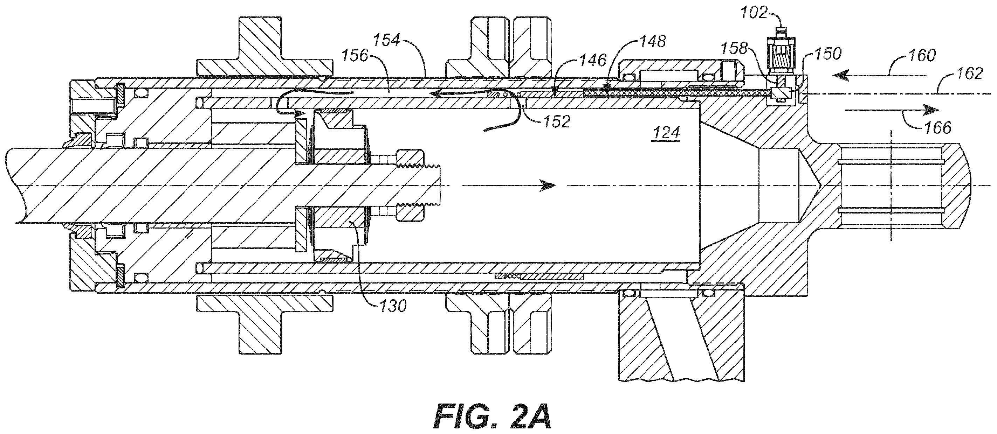

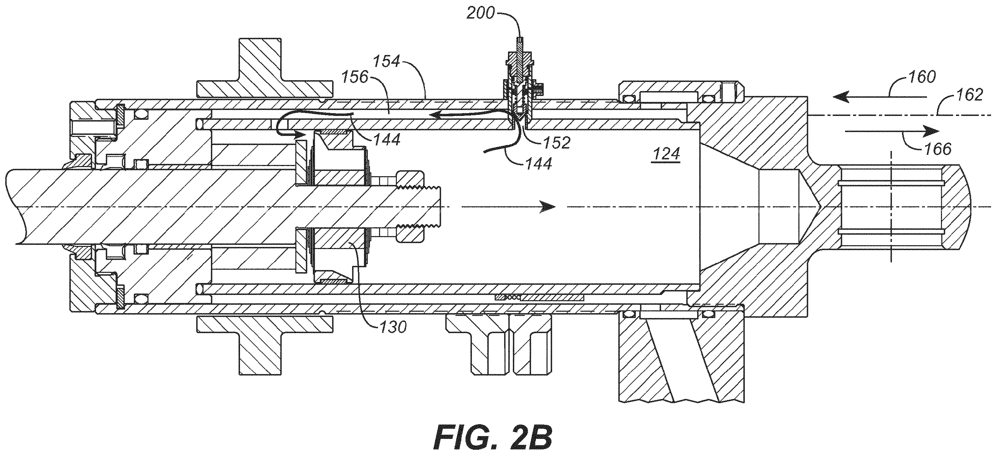

The following discussion will begin with a general description of a vehicle suspension damper, including the active bypass valve, in accordance with an embodiment. (See FIG. 1). The discussion continues with a detailed description of the active bypass valve, in accordance with an embodiment. (See FIGS. 2-5)

In the following discussion, the term "active" means adjustable, electronic, manipulatable, etc. while "passive" means fixed or not changeable. Thus, an active valve is a valve which automatically adjusts itself based on characteristics of the vehicle, the suspension, received user input, or the like, in which the valve is used.

As used herein, the terms "down", "up", "down-ward", "upward", "lower", "upper" and other direction references are relative and are used for reference only. Example Vehicle Suspension Damper with Active Bypass Valve

FIG. 1 illustrates a vehicle suspension damper 100 with a live or active bypass valve 102, in accordance with an embodiment. The vehicle suspension damper 100 includes a cylinder 120 having an interior 124, a first end 132, a second end 106 and defining an axis 136. The vehicle suspension damper 100 further includes a piston rod 142 and a piston 130. The piston 130 is movably mounted within the cylinder 120 for moving between the first end 132 and the second end 106. A bypass cylinder 154 surrounds the cylinder 120 and defines a cylindrical bypass channel 156. The adjustable bypass port 152, when open, fluidly couples the interior 124 of the cylinder 120 and the cylindrical bypass channel 156, permitting some working fluid to bypass the vented piston 130 when the piston 130 is positioned on the rebound portion 134 side of the adjustable bypass port 152. The adjustable bypass port 152, when partially blocked, fluidly couples the interior 124 of the cylinder 120 and the cylindrical bypass channel 156, permits less working fluid (e.g., a lesser amount of working fluid than when the adjustable bypass port 152 is fully open) to bypass the vented piston 130 when the piston 130 is positioned on the rebound portion 134 side of the adjustable bypass port 152. The adjustable bypass port 152, when completely blocked, fluidly couples the interior 124 of the cylinder 120 and the cylindrical bypass channel 156, permits no working fluid to bypass the vented piston 130 when the piston 130 is positioned on the rebound portion 134 side of the adjustable bypass port 152.

In one embodiment, the fluid meters from one side of the piston 130 to the other side by passing through flow paths 126A and 126B formed in the piston 130. In the embodiment shown, shims 128A and 128B are used to partially obstruct the flow paths 126A and 126B in each direction. By selecting shims 128A and 128B having certain desired stiffness characteristics, the damping effects caused by the piston 130 can be increased or decreased and damping rates can be different between the compression and rebound strokes of the piston 130. For example, shims 128A are configured to meter rebound flow from the rebound portion 134 of the cylinder 120 to the compression portion 104 of the cylinder 120. Shims 128B, on the other hand, are configured to meter compression flow from the compression portion 104 of the cylinder 120 to the rebound portion 134. In one embodiment, shims 128B are not included on the rebound portion side, nor is there a compression flow path such as flow path 126B, leaving the piston 130 essentially "locked out" in the compression stroke without some means of flow bypass. Note that piston apertures (not shown) may be included in planes other than those shown (e.g. other than apertures used by flow paths 126A and 126B) and further that such apertures may, or may not, be subject to the shims 128A and 128B as shown (because for example, the shims 128A and 128B may be clover-shaped or have some other non-circular shape). In one embodiment, the piston 130 is solid and all working fluid flow must traverse a flow bypass and/or communicate with a reservoir.

The upper portion of the piston rod 142 is supplied with a bushing set 138 for connecting to a portion of a vehicle component such as a wheel suspension linkage. In another embodiment, not shown, the upper portion of the piston rod 142 (opposite the piston 130) may be supplied with an eyelet 140 to be mounted to one part of the vehicle, while the lower part of the vehicle suspension damper 100 is attached to another portion of the vehicle, such as the frame, and moves independently of the first part. A spring member (not shown) is usually mounted to act between the same portions of the vehicle as the vehicle suspension damper. As the piston rod 142 and the piston 130 move into the cylinder 120 (during compression), the working fluid slows the movement of the two portions of the vehicle relative to each other due, at least in part, to the incompressible fluid moving through the shimmed flow paths 126B (past shims 128B) provided in the piston 130 and/or through an adjustable bypass port 152, as will be described herein. As the piston rod 142 and the piston 130 move out of the cylinder 120 (during extension or "rebound"), fluid meters again through shimmed flow paths 126A and the flow rate and corresponding rebound rate is controlled, at least in part, by the shims 128A. In FIG. 1, the piston 130 is shown at full extension and moving downward in a compression stroke, the movement shown by arrow 122.

### Example Active Bypass Valve

FIG. 2A is an enlarged view showing the active bypass valve 102, in accordance with an embodiment. As noted, the adjustable bypass port 152, when open, fluidly couples the interior 124 of the cylinder 120 with the cylindrical bypass channel 156, according to an embodiment. The adjustable bypass port 152 permits the working fluid to travel from a first side of the piston 130 to the other side without traversing shimmed flow paths 126A and 125B that may otherwise be traversed in a compression stroke of the vehicle suspension damper 100. In FIGS. 1 and 2A-B, the adjustable bypass port 152 is shown in an "open" position with the flow of fluid through the bypass shown by arrows 144 from a compression side to a rebound side of the piston 130.

In one embodiment, the entry pathway to the adjustable bypass port 152 in the embodiment shown in FIGS. 1 and 2A-B is located between the middle and the second end 106 of the cylinder 120. In one embodiment, as selected by design (e.g., axial location of the entry pathway to the adjustable bypass port 152), the adjustable bypass port 152 will not operate after the piston 130 passes the entry to the adjustable bypass port 152 near the end of a compression stroke (or elsewhere in the stroke as desired). In one embodiment, this "position sensitive" feature ensures increased damping will be in effect near the end of the compression stroke to help prevent the piston 130 from approaching a "bottomed out" position (e.g. impact) in the cylinder 120. The adjustable bypass port 152 and the active bypass valve 102 of the present embodiments can be used in any combination with the bypass valves shown and described in co-pending U.S. patent application Ser. Nos. 13/010,697.

The active bypass valve 102, in accordance with embodiments, includes a threaded plug 150, a rod 148 and a sleeve 146 disposed within the cylindrical bypass channel 156. In brief, movement of the actuator arm 158 causes the threaded plug 150 to push the rod 148. The rod 148 then pushes the sleeve 146. The sleeve 146 then moves to at least partially cover the adjustable bypass port 152. More particularly, the actuator arm 158 is operatively connected to the threaded plug 150 such that the threaded plug 150 can be angularly displaced in the direction of arrow 160 about its longitudinal axis 162 relative to the piston 130 in response to operation of the actuator arm 158. The actuator arm 158 is secured on the threaded plug 150. The actuator arm 158 extends radially outwardly from the threaded plug 150 such that the threaded plug 150 can be angularly displaced about its longitudinal axis 162 relative to the piston 130 in response to angular displacement of the actuator arm 158 relative to the piston 130. Of note, depending on the movement of the actuator arm 158, the sleeve 146 may occupy a position within the cylindrical bypass channel 156 such that the sleeve 146 completely blocks the opening of the adjustable bypass port 152, partially blocks the opening of the adjustable bypass port 152, or does not block the opening of the adjustable bypass port 152 at all.

In one embodiment, instead of (or in addition to) restricting the working size of adjustable bypass port 152, active bypass valve 102 can vary a flow rate through an inlet or outlet passage within the active bypass valve 102, itself. See, as an example, the electronic valve of Figures 2-4 of U.S. Patent 9,353,818 as further example of different types of "electronic" or "active" valves). Thus, the active bypass valve 102, can be used to meter the working fluid flow (e.g., control the rate of working fluid flow) in bypass channel 156 with/or without adjusting the working size (e.g., covering, uncovering, or partially covering the opening) of the adjustable bypass port 152.

For example, active bypass valve 102, when open, permits a first flow rate of the working fluid to travel through the cylindrical bypass channel 156. In contrast, when active bypass valve 102 is partially closed, a second flow rate of the working fluid though cylindrical bypass channel 156 occurs. The second flow rate is less than the first flow rate but greater than no flow rate. When active bypass valve 102is completely closed, the flow rate of the working fluid though cylindrical bypass channel 156 is statistically zero.

As can be seen in FIGS. 1-3B, due to the active bypass valve 102 arrangement, a relatively small solenoid (using relatively low amounts of power) can generate relatively large damping forces. Furthermore, due to incompressible fluid inside the vehicle suspension damper 100, damping occurs as the adjustable bypass port 152 size is reduced to the movement of sleeve 146. The result is a controllable damping rate. Certain active valve and bypass features are described and shown in U.S. Pat. Nos. 9,120,362; 8,627,932; 8,857,580; 9,033,122; and 9,239,090.

It should be appreciated that when the actuator arm 158 rotates in a reverse direction than that described above and herein, the threaded plug 150 moves in the direction of the arrow 166. As the threaded plug 150 moves in the direction of the arrow 166, the rod 148, and hence also the sleeve 146, moves in the direction of the arrow 166, and the adjustable bypass port 152 is at least partially opened. In one embodiment, upon the movement of the threaded plug 150 in the direction of the arrow 166, the rod 148 and the sleeve 146 moves in the direction of the arrow 166 due to gravity and/or the force applied by the working fluid against the sleeve 146 from the interior 124 of the cylinder 120 and toward the cylindrical bypass channel 156.

Thus, in addition to the damping features provided by the shims 128A and 128B through the flow paths 126A and 126B, embodiments enable the metering of working fluid from the interior 124 of the cylinder 120 to the rebound portion 134 of the vehicle suspension damper 100, via the active bypass valve 102 applied to the adjustable bypass port 152.

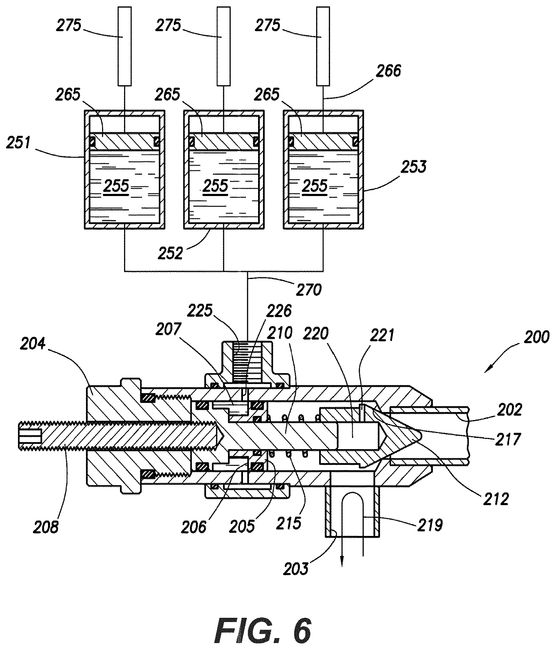

FIG. 2B illustrates a vehicle suspension damper 100 with another embodiment of an active bypass valve 200 which is a different configuration than active bypass valve 102 (as shown in detail in Figure 6) but which operates in the same overall manner and with the same processes as described with respect to Figure 2A, except that the control of the fluid flow is performed through active bypass valve 200 instead of using the sleeve type of configuration of active bypass valve 102. In Figure 2B, active bypass valve 200 extends from suspension damper 100 while the valving portion of active bypass valve 200 remains within the internal bypass configuration of suspension damper 100.

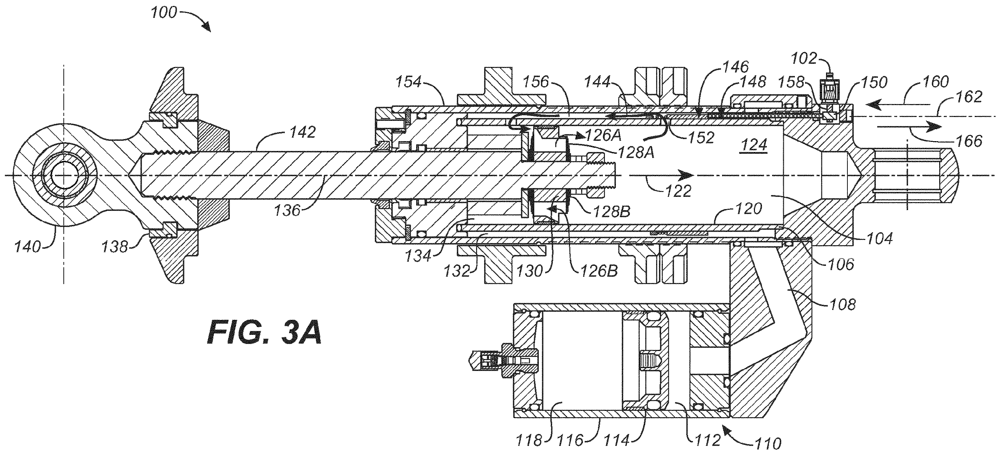

FIG. 3A illustrates a vehicle suspension damper 100 with an active bypass valve 102 and a reservoir 110, in accordance with an embodiment. In Figure 3A, reservoir 110 is in fluid communication with the cylinder 120 for receiving and supplying working fluid as the piston rod 142 moves in and out of the cylinder 120. The reservoir 110 includes a reservoir cylinder 116 in fluid communication with the compression portion 104 of the cylinder 120 via the fluid conduit 108. The reservoir 110 also includes a floating piston 114 with a volume of gas on a backside 118 ("blind end" side) of it, the gas being compressible as the reservoir cylinder 116, on the "frontside" 112 fills with working fluid due to movement of the piston rod 142 and the piston 130 into the cylinder 120. Certain features of reservoir type dampers are shown and described in U.S. Pat. No 7,374,028.

In one embodiment, the active bypass valve 102 is a live valve. That is, one or more of components of active bypass valve 102 (e.g., rod 148, sleeve 146 or the like) will be actuated automatically based on actual terrain conditions. For example, rod 148 and/or sleeve 146 are controlled by a servo within active bypass valve 102 which will automatically operate rod 148 and/or sleeve 146 to open, close or partially cover the adjustable bypass port 152 with sleeve 146 which will increase or reduce the working size of adjustable bypass port 152 to modify the flowrate of the fluid between the compression portion 104 of the cylinder 120 and the rebound portion 134 via the bypass channel 156.

In one embodiment, the live operation includes an active signal received by a receiver at active bypass valve 102 from a computing device. For example, the user would have an app on a smart phone (or other computing device) and would control the settings via the app. Thus, when the user wanted to adjust the flowrate of the fluid between the compression portion 104 of the cylinder 120 and the rebound portion 134, via the bypass channel 156, they would provide the proper command from the computing device and it would be received at active bypass valve 102 which would then automatically operate rod 148 and/or sleeve 146 causing sleeve 146 to cover, uncover, partially cover, or partially uncover adjustable bypass port 152.

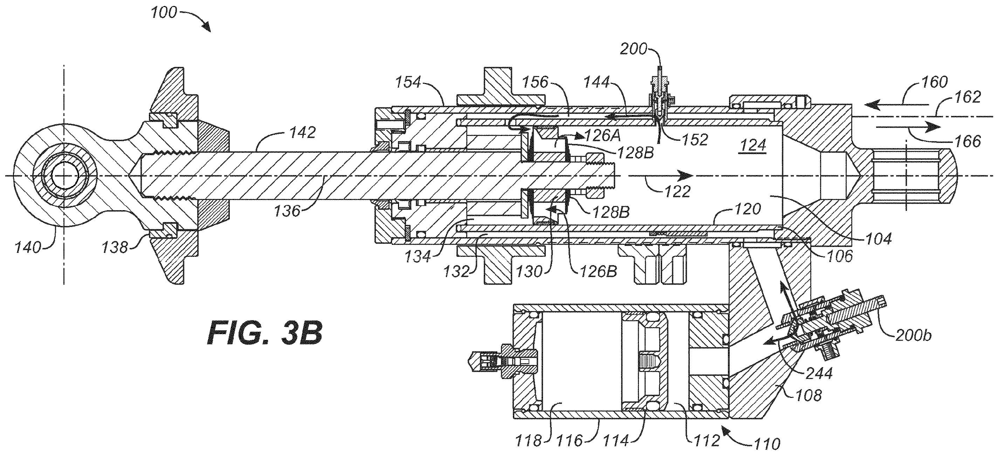

FIG. 3B illustrates a vehicle suspension damper 100 with another embodiment of an active bypass valve 200, a reservoir 110, and an additional active valve 200b (which is similar to the active valve 102 and/or 200 as described herein, except that it is provided in fluid conduit 108 instead of in a bypass configuration), in accordance with an embodiment. In Figure 3B, reservoir 110 is similar to reservoir 110 of Figure 3A, except for the addition of active valve 200b in the fluid conduit 108 which can open or close the flow path between the reservoir 110 and the vehicle suspension damper 100 as indicated by flow arrows 244.

In one embodiment, a portion of active bypass valve 200 extends from suspension damper 100 while the valving portion of active bypass valve 200 remains within the internal bypass configuration of suspension damper 100.

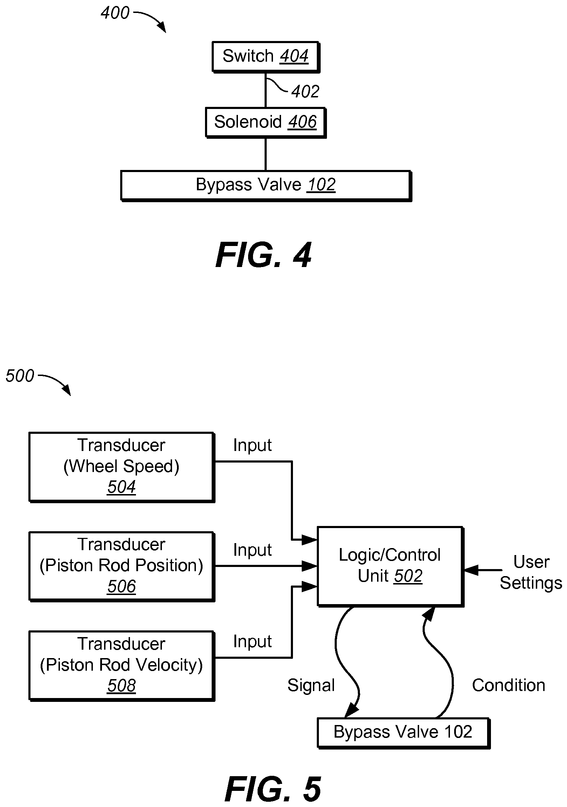

Both the active bypass valve 200 and active valve 200b are live valves as described in further detail in Figures 4-6. In one embodiment, active bypass valve 200 will be actuated automatically based on actual terrain conditions. For example, active bypass valve 200 is operated as discussed in Figures 4-6 to open, close or partially allow flow through bypass port 152 to modify the flowrate of the fluid between the compression portion 104 of the cylinder 120 and the rebound portion 134 via the bypass channel 156.

In one embodiment, the live operation includes an active signal received by a receiver at active bypass valve 200 and/or active valve 200b from a computing system. Thus, to adjust the flowrate of the fluid between the compression portion 104 of the cylinder 120 and the rebound portion 134, via the bypass channel 156, the command would be provided from the computing system and received at active bypass valve 200 which would then automatically open, close or partially allow fluid flow through bypass port 152. Similarly, the computing system can provide an active signal received by a receiver at active valve 200b to adjust the flowrate of the fluid between the compression portion 104 of the cylinder 120 and the reservoir 110, via the fluid conduit 108, the would be provided from the computing system and received at active valve 200b which would then automatically open, close or partially allow fluid flow through fluid conduit 108.

Although two active valves are shown in Figure 3B, it is understood that any number of active valves corresponding to any number of fluid channels (e.g., bypass channels, reservoir channels, bottom out channels, etc.) for a corresponding number of vehicle suspension dampers could be used alone or in combination. That is, one or more active valves could be operated simultaneously or separately depending upon needs in a vehicular suspension system. For example, a suspension damper could have one, a combination of, or each of an active valve(s): for an internal bypass, for an external bypass, for a fluid conduit 108 to the reservoir 110, etc. In other words, anywhere there is a fluid flow path within a suspension damper 100, an active valve could be used. Moreover, the active valve could be alone or used in combination with other active valves at other fluid flow paths to automate one or more of the damping performance characteristics of the dampening assembly. Moreover, additional switches could permit individual operation of separate active bypass valves.

Referring now to Figure 4, in various embodiments of the present invention, suspension damper includes a bypass channel 156 having an adjustable bypass port 152, such that the flowrate of the fluid between the compression portion 104 of the cylinder 120 and the rebound portion 134, via the bypass channel 156, is automatically adjustable using active bypass valve 102 to move rod 148 and/or sleeve 146 causing sleeve 146 to change the working size of adjustable bypass port 152. In one such embodiment, active bypass valve 102 is solenoid operated, hydraulically operated, pneumatically operated, or operated by any other suitable motive mechanism. Active bypass valve 102 may be operated remotely by a switch or potentiometer located in the cockpit of a vehicle or attached to appropriate operational parts of a vehicle for timely activation (e.g. brake pedal) or may be operated in response to input from a microprocessor (e.g. calculating desired settings based on vehicle acceleration sensor data) or any suitable combination of activation means. In like manner, a controller for active bypass valve 102 may be cockpit mounted and may be manually adjustable or microprocessor controlled or both or selectively either.

It may be desirable to increase the damping rate or effective stiffness of vehicle suspension damper 100 when moving a vehicle from off-road to on highway use. Off-road use often requires a high degree of compliance to absorb shocks imparted by the widely varying terrain. On highway use, particularly with long wheel travel vehicles, often requires more rigid shock absorption to allow a user to maintain control of a vehicle at higher speeds. This may be especially true during cornering or braking.

One embodiment comprises a four-wheeled vehicle having vehicle suspension damper 100 equipped with a bypass channel 156 wherein the flowrate of the fluid between the compression portion 104 of the cylinder 120 and the rebound portion 134 via the bypass channel 156 is automatically adjustable using active bypass valve 102 at each (of four) wheel.

For example, the opening size of adjustable bypass port 152 which controls the flowrate of the fluid between the compression portion 104 of the cylinder 120 and the rebound portion 134, via the bypass channel 156, is automatically adjusted by active bypass valve 102 (including, for example, a remotely controllable active bypass valve 102). In one embodiment, each of the front shock absorbers may be electrically connected with a linear switch (such as that which operates an automotive brake light) that is activated in conjunction with the vehicle brake. When the brake is moved beyond a certain distance, corresponding usually to harder braking and hence potential for vehicle nose dive, the electric switch connects a power supply to a motive force generator for active bypass valve 102 in the front shocks causes active bypass valve 102 to automatically move rod 148 and/or sleeve 146 and cause sleeve 146 to cover or partially cover more of adjustable bypass port 152.

In so doing, the reduction in the size of adjustable bypass port 152 increases the stiffness of that shock. As such, the front shocks become more rigid during hard braking. Other mechanisms may be used to trigger the shocks such as accelerometers (e.g. tri-axial) for sensing pitch and roll of the vehicle and activating, via a microprocessor, the appropriate amount of rotation of active bypass valve 102 to cause sleeve 146 to cover, uncover, partially cover, or partially uncover adjustable bypass port 152 (and corresponding adjustment of the size of adjustable bypass port 152 modifies the flowrate of the fluid between the compression portion 104 of the cylinder 120 and the rebound portion 134, via the bypass channel 156, for the corresponding vehicle suspension damper 100) for optimum vehicle control.

In one embodiment, a vehicle steering column includes right turn and left turn limit switches such that a hard turn in either direction activates the appropriate adjustment of active bypass valve 102 to cause sleeve 146 to cover, uncover, partially cover, or partially uncover adjustable bypass port 152 (and corresponding adjustment of the size of adjustable bypass port 152 modifies the flowrate of the fluid between the compression portion 104 of the cylinder 120 and the rebound portion 134, via the bypass channel 156, for the corresponding vehicle suspension damper 100) of shocks opposite that direction (for example, a hard, right turn would cause more rigid shocks on the vehicle's left side). Again, accelerometers in conjunction with a microprocessor and a switched power supply may perform the active bypass valve 102 activation function by sensing the actual g-force associated with the turn (or braking; or acceleration for the rear shock activation) and triggering the appropriate amount of rotation of active bypass valve 102 to cause sleeve 146 to cover, uncover, partially cover, or partially uncover adjustable bypass port 152 (and corresponding adjustment of the size of adjustable bypass port 152 modifies the flowrate of the fluid between the compression portion 104 of the cylinder 120 and the rebound portion 134, via the bypass channel 156, for the corresponding vehicle suspension damper 100) at a preset acceleration threshold value (e.g., a g-force).

Figure 4 is a schematic diagram showing a control arrangement 400 for a remotely-operated active bypass valve 102. As illustrated, a signal line 402 runs from a switch 404 to a solenoid 406. Thereafter, the solenoid 406 converts electrical energy into mechanical movement and shifts position of active bypass valve 102, thereby adjusting the location of rod 148 and/or sleeve 146 and causing sleeve 146 to cover, uncover, partially cover, or partially uncover adjustable bypass port 152. Adjusting the size of adjustable bypass port 152 modifies the flowrate of the fluid between the compression portion 104 of the cylinder 120 and the rebound portion 134, via the bypass channel 156, thereby varying the stiffness of a corresponding vehicle suspension damper 100.

As discussed, a remotely-operable active bypass valve 102 like the one described above is particularly useful with an on-/off-road vehicle. These vehicles can have more than 20" of shock absorber travel to permit them to negotiate rough, uneven terrain at speed with usable shock absorbing function. In off-road applications, compliant dampening is necessary as the vehicle relies on its long travel suspension when encountering often large off-road obstacles. Operating a vehicle with very compliant, long travel suspension on a smooth road at road speeds can be problematic due to the springiness/sponginess of the suspension and corresponding vehicle handling problems associated with that (e.g. turning roll, braking pitch). Such compliance can cause reduced handling characteristics and even loss of control. Such control issues can be pronounced when cornering at high speed as a compliant, long travel vehicle may tend to roll excessively. Similarly, such a vehicle may include excessive pitch and yaw during braking and/or acceleration. With the remotely-operated active bypass valve 102, the working size of adjustable bypass port 152 is automatically adjusted thereby modifying the communication of fluid between the compression portion 104 of the cylinder 120 and the rebound portion 134 via the bypass channel 156. Correspondingly, the dampening characteristics of vehicle suspension damper 100 can be changed.

In addition to, or in lieu of, the simple, switch-operated remote arrangement of Figure 4, the remotely-operable active bypass valve 102 can be operated automatically based upon one or more driving conditions. Figure 5 shows a schematic diagram of a control system 500 based upon any or all of vehicle speed, damper rod speed, and damper rod position. One embodiment of the arrangement of Figure 5 is designed to automatically increase dampening in a shock absorber in the event a damper rod reaches a certain velocity in its travel towards the bottom end of a damper at a predetermined speed of the vehicle. In one embodiment, the control system 500 adds dampening (and control) in the event of rapid operation (e.g. high rod velocity) of the vehicle suspension damper 100 to avoid a bottoming out of the damper rod as well as a loss of control that can accompany rapid compression of a shock absorber with a relative long amount of travel. In one embodiment, the control system 500 adds dampening (e.g., adjusts the size of the opening of adjustable bypass port 152 by causing sleeve 146 to cover, uncover, partially cover, or partially uncover adjustable bypass port 152) in the event that the rod velocity in compression is relatively low but the rod progresses past a certain point in the travel.

Such configuration aids in stabilizing the vehicle against excessive low-rate suspension movement events such as cornering roll, braking and acceleration yaw and pitch and "g-out."

Figure 5 illustrates, for example, a control system 500 including three variables: wheel speed, corresponding to the speed of a vehicle component (measured by wheel speed transducer 504), piston rod position (measured by piston rod position transducer 506), and piston rod velocity (measured by piston rod velocity transducer 508). Any or all of the variables shown may be considered by logic unit 502 in controlling the solenoids or other motive sources coupled to active bypass valve 102 for changing the working size of the opening of adjustable bypass port 152 by causing sleeve 146 to cover, uncover, partially cover, or partially uncover adjustable bypass port 152. Any other suitable vehicle operation variable may be used in addition to or in lieu of the variables 504, 506, and 508 such as, for example, piston rod compression strain, eyelet strain, vehicle mounted accelerometer (or tilt/inclinometer) data or any other suitable vehicle or component performance data.

In one embodiment, the piston's position within the damping chamber is determined using an accelerometer to sense modal resonance of the suspension damper. Such resonance will change depending on the position of the piston and an on-board processor (computer) is calibrated to correlate resonance with axial position. In one embodiment, a suitable proximity sensor or linear coil transducer or other electro-magnetic transducer is incorporated in the damping chamber to provide a sensor to monitor the position and/or speed of the piston (and suitable magnetic tag) with respect to a housing of the suspension damper.

In one embodiment, the magnetic transducer includes a waveguide and a magnet, such as a doughnut (toroidal) magnet that is joined to the cylinder and oriented such that the magnetic field generated by the magnet passes through the rod and the waveguide. Electric pulses are applied to the waveguide from a pulse generator that provides a stream of electric pulses, each of which is also provided to a signal processing circuit for timing purposes. When the electric pulse is applied to the waveguide, a magnetic field is formed surrounding the waveguide. Interaction of this field with the magnetic field from the magnet causes a torsional strain wave pulse to be launched in the waveguide in both directions away from the magnet. A coil assembly and sensing tape is joined to the waveguide. The strain wave causes a dynamic effect in the permeability of the sensing tape which is biased with a permanent magnetic field by the magnet. The dynamic effect in the magnetic field of the coil assembly due to the strain wave pulse, results in an output signal from the coil assembly that is provided to the signal processing circuit along signal lines.

By comparing the time of application of a particular electric pulse and a time of return of a sonic torsional strain wave pulse back along the waveguide, the signal processing circuit can calculate a distance of the magnet from the coil assembly or the relative velocity between the waveguide and the magnet. The signal processing circuit provides an output signal, which is digital or analog, proportional to the calculated distance and/or velocity. A transducer-operated arrangement for measuring piston rod speed and velocity is described in U.S. Pat. No. 5,952,823.

While transducers located at the suspension damper measure piston rod velocity (piston rod velocity transducer 508), and piston rod position (piston rod position transducer 506), a separate wheel speed transducer 504 for sensing the rotational speed of a wheel about an axle includes housing fixed to the axle and containing therein, for example, two permanent magnets. In one embodiment, the magnets are arranged such that an elongated pole piece commonly abuts first surfaces of each of the magnets, such surfaces being of like polarity. Two inductive coils having flux-conductive cores axially passing therethrough abut each of the magnets on second surfaces thereof, the second surfaces of the magnets again being of like polarity with respect to each other and of opposite polarity with respect to the first surfaces. Wheel speed transducers are described in U.S. Pat. No. 3,986,118.

In one embodiment, as illustrated in Figure 5, the logic unit 502 with user-definable settings receives inputs from piston rod position transducer 506, piston rod velocity transducer 508, as well as wheel speed transducer 504. Logic unit 502 is user-programmable and, depending on the needs of the operator, logic unit 502 records the variables and, then, if certain criteria are met, logic unit 502 sends its own signal to active bypass valve 102 (e.g., the logic unit 502 is an activation signal provider) to cause active bypass valve 102 to move into the desired state (e.g., adjust the bypass flow rate). Thereafter, the condition, state or position of active bypass valve 102 is relayed back to logic unit 502 via an active bypass valve monitor or the like.

In one embodiment, logic unit 502 shown in Figure 5 assumes a single active bypass valve 102 corresponding to a single adjustable bypass port 152 of a single vehicle suspension damper 100, but logic unit 502 is usable with any number of active bypass valves or groups of active bypass valves corresponding to any number of bypass channels, adjustable bypass ports, or groups of bypass channels or adjustable bypass ports. For instance, the suspension dampers on one side of the vehicle can be acted upon while the vehicles other suspension dampers remain unaffected.

While the examples illustrated relate to manual operation and automated operation based upon specific parameters, the remotely-operated active bypass valve 102 can be used in a variety of ways with many different driving and road variables. In one example, active bypass valve 102 is controlled based upon vehicle speed in conjunction with the angular location of the vehicle's steering wheel. In this manner, by sensing the steering wheel turn severity (angle of rotation), additional dampening (by adjusting the corresponding size of the opening of adjustable bypass port 152 by causing sleeve 146 to cover, uncover, partially cover, or partially uncover adjustable bypass port 152) can be applied to one vehicle suspension damper 100 or one set of vehicle suspension dampers on one side of the vehicle (suitable for example to mitigate cornering roll) in the event of a sharp turn at a relatively high speed.

In another example, a transducer, such as an accelerometer, measures other aspects of the vehicle's suspension system, like axle force and/or moments applied to various parts of the vehicle, like steering tie rods, and directs change to position of active bypass valve 102 (and corresponding change to the working size of the opening of adjustable bypass port 152 by causing sleeve 146 to cover, uncover, partially cover, or partially uncover adjustable bypass port 152) in response thereto. In another example, active bypass valve 102 is controlled at least in part by a pressure transducer measuring pressure in a vehicle tire and adding dampening characteristics to some or all of the wheels (by adjusting the working size of the opening of adjustable bypass port 152 by causing sleeve 146 to cover, uncover, partially cover, or partially uncover adjustable bypass port 152) in the event of, for example, an increased or decreased pressure reading.

In one embodiment, active bypass valve 102 is controlled in response to braking pressure (as measured, for example, by a brake pedal (or lever) sensor or brake fluid pressure sensor or accelerometer). In still another example, a parameter might include a gyroscopic mechanism that monitors vehicle trajectory and identifies a "spin-out" or other loss of control condition and adds and/or reduces dampening to some or all of the vehicle's dampers (by adjusting the working size of the opening of adjustable bypass port 152 by causing sleeve 146 to cover, uncover, partially cover, or partially uncover adjustable bypass port 152 chambers) in the event of a loss of control to help the operator of the vehicle to regain control.

FIG. 6 is an enlarged view showing an embodiment of a remotely operable active bypass valve 200. Although Fig. 6 shows the active bypass valve 200 in a closed position (e.g. during a rebound stroke of the damper), the following discussion also includes the opening of active bypass valve 200. Active bypass valve 200 includes a valve body 204 housing a movable piston 205 which is sealed within the body. The piston 205 includes a sealed chamber 207 adjacent an annularly-shaped piston surface 206 at a first end thereof. The chamber 207 and piston surface 206 are in fluid communication with a port 225 accessed via opening 226. Two additional fluid communication points are provided in the body including an inlet 202 and an outlet 203 for fluid passing through the active bypass valve 200.

Extending from a first end of the piston 205 is a shaft 210 having a cone-shaped valve member 212 (other shapes such as spherical or flat, with corresponding seats, will also work suitably well) disposed on an end thereof. The cone-shaped member 212 is telescopically mounted relative to, and movable on, the shaft 210 and is biased toward an extended position due to a spring 215 coaxially mounted on the shaft 210 between the member 212 and the piston 205. Due to the spring biasing, the cone-shaped member 212 normally seats itself against a seat 217 formed in an interior of the body 204.

As shown, the cone shaped member 212 is seated against seat 217 due to the force of the spring 215 and absent an opposite force from fluid entering the valve along path 156 from the cylindrical bypass channel 156 (of Figure 2B). As member 212 telescopes out, a gap 220 is formed between the end of the shaft 210 and an interior of member 212. A vent 221 is provided to relieve any pressure formed in the gap. With a fluid path through the active bypass valve 200 (from 203 to 202) closed, fluid communication is substantially shut off from the rebound side of the cylinder into the valve body (and hence through the bypass back to the compression side) and its "dead-end" path is shown by arrow 219.

In one embodiment, there is a manual pre-load adjustment on the spring 215 permitting a user to hand-load or un-load the spring using a threaded member 208 that transmits motion of the piston 205 towards and away from the conical member, thereby changing the compression on the spring 215.

Also shown in FIG. 6 is a plurality of valve operating cylinders 251, 252, 253. In one embodiment, the cylinders each include a predetermined volume of fluid 255 that is selectively movable in and out of each cylindrical body through the action of a separate corresponding piston 265 and rod 266 for each cylindrical body. A fluid path 270 runs between each cylinder and port 225 of the valve body where annular piston surface 206 is exposed to the fluid.

Because each cylinder has a specific volume of substantially incompressible fluid and because the volume of the sealed chamber 207 adjacent the annular piston surface 206 is known, the fluid contents of each cylinder can be used, individually, sequentially or simultaneously to move the piston a specific distance, thereby effecting the dampening characteristics of the system in a relatively predetermined and precise way.

While the cylinders 251-253 can be operated in any fashion, in the embodiment shown each piston 265 and rod 266 is individually operated by a solenoid 275 and each solenoid, in turn, is operable from a remote location of the vehicle, like a cab of a motor vehicle or even the handlebar area of a motor or bicycle (not shown). Electrical power to the solenoids 275 is available from an existing power source of a vehicle or is supplied from its own source, such as on-board batteries. Because the cylinders may be operated by battery or other electric power or even manually (e.g. by syringe type plunger), there is no requirement that a so-equipped suspension rely on any pressurized vehicle hydraulic system (e.g. steering, brakes) for operation. Further, because of the fixed volume interaction with the bypass valve there is no issue involved in stepping from hydraulic system pressure to desired suspension bypass operating pressure.

In one embodiment, e.g., when active bypass valve 200 is in the damping-open position, fluid flow through the cylindrical bypass channel 156 provides adequate force on the member 212 to urge it backwards, at least partially loading the spring 215 and creating fluid path 201 from the cylindrical bypass channel 156 into a rebound portion 134 of the vehicle suspension damper 100.

The characteristics of the spring 215 are typically chosen to permit active bypass valve 200 (e.g. member 212) to open at a predetermined bypass pressure, with a predetermined amount of control pressure applied to inlet 225, during a compression stroke of vehicle suspension damper 100. For a given spring 215, higher control pressure at inlet 225 will result in higher bypass pressure required to open the active bypass valve 200 and correspondingly higher damping resistance in the cylindrical bypass channel 156 (more compression damping due to that bypass). In one embodiment, the control pressure at inlet 225 is raised high enough to effectively "lock" the bypass closed resulting in a substantially rigid compression damper (particularly true when a solid damping piston is also used).

In one embodiment, the valve is open in both directions when the valve member 212 is "topped out" against valve body 204. In another embodiment however, when the valve piston 205 is abutted or "topped out" against valve body 204 the spring 215 and relative dimensions of the active bypass valve 200 still allow for the cone member 212 to engage the valve seat 217 thereby closing the valve. In such embodiment backflow from the rebound side of the cylinder 102 to the compression side is always substantially closed and cracking pressure from flow along path 156 is determined by the pre-compression in the spring 215. In such embodiment, additional fluid pressure may be added to the inlet through port 225 to increase the cracking pressure for flow along path 156 and thereby increase compression damping through the bypass over that value provided by the spring compression "topped out." It is generally noteworthy that while the descriptions herein often relate to compression damping bypass and rebound shut off, some or all of the bypass channels (or channel) on a given suspension unit may be configured to allow rebound damping bypass and shut off or impede compression damping bypass.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments could be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

It should be noted that any of the features disclosed herein may be useful alone or in any suitable combination. While the foregoing is directed to embodiments of the present invention, other and further embodiments of the invention may be implemented without departing from the scope of the invention, and the scope thereof is determined by the claims that follow.

## Claims

1. A vehicle suspension damper (100) comprising:
a cylinder and a piston assembly, wherein said piston assembly comprises a piston (130) having a first side and a second side, and a flow path formed through said piston from said first side to said second side;
a working fluid within said cylinder;
a bypass cylinder (154) surrounding said cylinder and defining a cylindrical bypass channel (156); and
an active bypass valve (102) coupled with said cylindrical bypass channel (156), said active bypass valve configured to meter a fluid flow of said working fluid through said cylindrical bypass channel (156), said active bypass valve (102) configured to automatically adjust itself based on characteristics of the vehicle, such as the suspension or received user input;
**characterized in that** said cylinder comprises a first fluid port (152) and a second fluid port each fluidly coupling an interior (124) of said cylinder and said cylindrical bypass channel (156), and **in that** said cylindrical bypass channel extends between said first (152) and second fluid ports along said cylinder for said working fluid to travel from said first side (104) of said piston (130) to said second side (134) of said piston (130) without traversing a flow path (126A, 126B) formed through said piston, and **in that** said active bypass valve (102) is configured to meter compression damping bypass flow and shut off of said working fluid through said bypass channel (156) and to meter rebound damping bypass flow and shut off of said working fluid through said bypass channel (156).

2. A vehicle suspension damper as claimed in Claim 1, wherein in use said working fluid travels through said cylindrical bypass channel (156) from one side of said piston (130) to another side of said piston at a first flow rate when said active bypass valve (102) is in an open position.

3. A vehicle suspension damper as claimed in Claim 2, wherein in use said working fluid travels through said cylindrical bypass channel (156) from one side of said piston (130) to another side of said piston at a second flow rate when said active bypass valve (102) is in a partially open position,
the second flow rate of said working fluid is less than said first flow rate of said working fluid.

4. A vehicle suspension damper as claimed in Claim 1, 2 or 3, wherein in use none of said working fluid travels through said cylindrical bypass channel (156) from one side of said piston to another side of said piston when said active bypass valve (102) is in a closed position.

5. A vehicle suspension damper as claimed in Claim 1, 2, 3 or 4, wherein said first fluid port comprises an adjustable bypass port fluidly (152) coupling an interior of said cylinder and said cylindrical bypass channel (156); and
said active bypass valve (102) further comprises:
an actuator arm (158); and
a threaded plug (150) coupled with said actuator arm, wherein said threaded plug is configured for being angularly displaced within said cylindrical bypass channel (156) about a longitudinal axis of said threaded plug (150) relative to said piston (130) in response to an angular displacement of said actuator arm (158).

6. A vehicle suspension damper as claimed in Claim 5, wherein said active bypass valve (102) further comprises:
a rod (148) disposed adjacent to said threaded plug (150), wherein said rod is configured for moving along said longitudinal axis within said cylindrical bypass channel (156) in response to an angular displacement experienced by said threaded plug.

7. A vehicle suspension damper as claimed in Claim 6, wherein said active bypass valve (102) further comprises:
a sleeve (146) coupled to said rod (148) and extending from said rod along the same longitudinal axis as said rod, wherein said sleeve is configured for moving along said longitudinal axis within said cylindrical bypass channel (156) in response to said moving by said rod, wherein said sleeve provides an adjustment to a working size of said adjustable bypass port (152).

8. A vehicle suspension damper as claimed in any preceding Claim, further comprising:
a control system (500) coupled to said active bypass valve (102), said control system comprising:
a sensor (504, 506, 508) to obtain vehicle acceleration sensor data associated with a movement of a vehicle component of a vehicle;
a comparer (502) to compare a value of said vehicle acceleration sensor data with a predetermined acceleration threshold value that corresponds to said vehicle component;
an active bypass valve monitor to monitor a state of said active bypass valve (102), wherein said state controls a damping force within said vehicle suspension damper; and
an activation signal provider to, based on said comparing and said monitoring, actuate said active bypass valve (102) to meter the flow of said working fluid through said cylindrical bypass channel (156), such that a damping characteristic of said vehicle suspension damper (100) is modified.

9. A vehicle suspension damper as claimed in any preceding Claim, further comprising:
a fluid conduit (108); and
a reservoir cylinder (116) in fluid communication with the cylinder via the fluid conduit (108), the reservoir cylinder to receive and supply the working fluid as the piston assembly moves in and out of the cylinder.

10. A vehicle suspension damper as claimed in Claim 9 wherein the reservoir cylinder (116) is in fluid communication with a rebound portion of the cylinder via the fluid conduit (108).

11. A vehicle suspension damper as claimed in Claim 9 or 10, further comprising: an active valve (200b) coupled with said fluid conduit (108),
the active valve having a flow path therethrough,
the active valve to meter a flow of said working fluid through said fluid conduit.

12. A vehicle suspension damper as claimed in Claim 11, further comprising:
a control system (500) coupled to said active valve, said control system comprising:
a sensor (504, 506, 508) to obtain a vehicle acceleration sensor data associated with a movement of a vehicle component of said vehicle;
a comparer (502) to compare a value of said vehicle acceleration sensor data with a predetermined acceleration threshold value that corresponds to said vehicle component;
an active valve monitor to monitor a state of said active valve (200b), wherein said state controls a damping force within said vehicle suspension damper; and
an activation signal provider to, based on said comparing and said monitoring, actuate said active valve to meter the flow of said working fluid through said fluid conduit (108), such that a damping characteristic of said vehicle suspension damper is modified.

13. A vehicle comprising a vehicle suspension damper as claimed in any preceding claim.

## Patentansprüche

1. Fahrzeugaufhängungsdämpfer (100), umfassend:
einen Zylinder und eine Kolbenbaugruppe, wobei die Kolbenbaugruppe einen Kolben (130), der eine erste Seite und eine zweite Seite aufweist, und einen Flussweg, der durch den Kolben von der ersten Seite zu der zweiten Seite gebildet ist, umfasst;
ein Arbeitsfluid innerhalb des Zylinders;
einen Bypass-Zylinder (154), der den Zylinder umgibt und einen zylindrischen Bypass-Kanal (156) definiert; und
ein aktives Bypass-Ventil (102), das mit dem zylindrischen Bypass-Kanal (156) gekoppelt ist, wobei das aktive Bypass-Ventil dazu konfiguriert ist, einen Fluidfluss des Arbeitsfluids durch den zylindrischen Bypass-Kanal (156) zu messen, wobei das aktive Bypass-Ventil (102) dazu konfiguriert ist, sich basierend auf Eigenschaften des Fahrzeugs, wie der Aufhängung oder empfangener Benutzereingabe, selbst automatisch anzupassen;
**dadurch gekennzeichnet, dass** der Zylinder einen ersten Fluidanschluss (152) und einen zweiten Fluidanschluss umfasst, die jeweils ein Inneres (124) des Zylinders und den zylindrischen Bypass-Kanal (156) fluidisch koppeln, und dass sich der zylindrische Bypass-Kanal zwischen dem ersten (152) und dem zweiten Fluidanschluss entlang des Zylinders erstreckt, damit sich das Arbeitsfluid von der ersten Seite (104) des Kolbens (130) zu der zweiten Seite (134) des Kolbens (130) fortbewegt, ohne einen Flussweg (126A, 126B) zu durchqueren, der durch den Kolben gebildet ist, und dass das aktive Bypass-Ventil (102) dazu konfiguriert ist, Kompressionsdämpfungs-Bypass-Fluss zu messen und das Arbeitsfluid durch den Bypass-Kanal (156) zu sperren und Rückpralldämpfungs-Bypass-Fluss zu messen und das Arbeitsfluid durch den Bypass-Kanal (156) zu sperren.

2. Fahrzeugaufhängungsdämpfer nach Anspruch 1, wobei sich in Verwendung das Arbeitsfluid durch den zylindrischen Bypass-Kanal (156) von einer Seite des Kolbens (130) zu einer anderen Seite des Kolbens mit einer ersten Flussrate fortbewegt, wenn das aktive Bypass-Ventil (102) in einer offenen Position ist.

3. Fahrzeugaufhängungsdämpfer nach Anspruch 2, wobei sich in Verwendung das Arbeitsfluid durch den zylindrischen Bypass-Kanal (156) von einer Seite des Kolbens (130) zu einer anderen Seite des Kolbens mit einer zweiten Flussrate fortbewegt, wenn das aktive Bypass-Ventil (102) in einer teilweise offenen Position ist,
wobei die zweite Flussrate des Arbeitsfluids weniger als die erste Flussrate des Arbeitsfluids ist.

4. Fahrzeugaufhängungsdämpfer nach Anspruch 1, 2 oder 3, wobei sich in Verwendung keines von dem Arbeitsfluid durch den zylindrischen Bypass-Kanal (156) von einer Seite des Kolbens zu einer anderen Seite des Kolbens fortbewegt, wenn das aktive Bypass-Ventil (102) in einer geschlossenen Position ist.

5. Fahrzeugaufhängungsdämpfer nach Anspruch 1, 2, 3 oder 4, wobei der erste Fluidanschluss einen anpassbaren Bypass-Anschluss umfasst, der ein Inneres des Zylinders und des zylindrischen Bypass-Kanals (156) fluidisch (152) koppelt; und
das aktive Bypass-Ventil (102) ferner Folgendes umfasst:
einen Aktorarm (158); und
einen Gewindestopfen (150), der mit dem Aktorarm gekoppelt ist, wobei der Gewindestopfen dazu konfiguriert ist, innerhalb des zylindrischen Bypass-Kanals (156) um eine Längsachse des Gewindestopfens (150) relativ zu dem Kolben (130) als Reaktion auf eine Winkelverschiebung des Aktorarms (158) winklig verschoben zu werden.

6. Fahrzeugaufhängungsdämpfer nach Anspruch 5, wobei das aktive Bypass-Ventil (102) ferner Folgendes umfasst:
eine Stange (148), die benachbart zu dem Gewindestopfen (150) angeordnet ist, wobei die Stange dazu konfiguriert ist, sich entlang der Längsachse innerhalb des zylindrischen Bypass-Kanals (156) als Reaktion auf eine Winkelverschiebung, die durch den Gewindestopfen erfahren wird, zu bewegen.

7. Fahrzeugaufhängungsdämpfer nach Anspruch 6, wobei das aktive Bypass-Ventil (102) ferner Folgendes umfasst:
eine Hülse (146), die an die Stange (148) gekoppelt ist und sich von der Stange entlang der gleichen Längsachse wie die Stange erstreckt, wobei die Hülse dazu konfiguriert ist, sich entlang der Längsachse innerhalb des zylindrischen Bypass-Kanals (156) als Reaktion auf das Bewegen durch die Stange zu bewegen, wobei die Hülse eine Anpassung an eine Arbeitsgröße des anpassbaren Bypass-Anschlusses (152) bereitstellt.

8. Fahrzeugaufhängungsdämpfer nach einem vorhergehenden Anspruch, ferner umfassend:
ein Steuersystem (500), das an das aktive Bypass-Ventil (102) gekoppelt ist, wobei das Steuersystem Folgendes umfasst:
einen Sensor (504, 506, 508), um Fahrzeugbeschleunigungssensordaten assoziiert mit einer Bewegung einer Fahrzeugkomponente eines Fahrzeugs zu erhalten;
einen Vergleicher (502), um einen Wert der Fahrzeugbeschleunigungssensordaten mit einem vorbestimmten Beschleunigungsschwellenwert, welcher der Fahrzeugkomponente entspricht, zu vergleichen;
einen aktiven Bypass-Ventilmonitor, um einen Zustand des aktiven Bypass-Ventils (102) zu überwachen, wobei der Zustand eine Dämpfungskraft innerhalb des Fahrzeugaufhängungsdämpfers steuert; und
einen Aktivierungssignalgeber, um basierend auf dem Vergleichen und dem Überwachen das aktive Bypass-Ventil (102) zu betätigen, um den Fluss des Arbeitsfluids durch den zylindrischen Bypass-Kanal (156) zu messen, sodass eine Dämpfungseigenschaft des Fahrzeugaufhängungsdämpfers (100) modifiziert wird.

9. Fahrzeugaufhängungsdämpfer nach einem vorhergehenden Anspruch, ferner umfassend:
eine Fluidleitung (108); und
einen Reservoirzylinder (116) in Fluidkommunikation mit dem Zylinder über die Fluidleitung (108), wobei der Reservoirzylinder das Arbeitsfluid aufnimmt und zuführt, wenn sich die Kolbenbaugruppe in den und aus dem Zylinder bewegt.

10. Fahrzeugaufhängungsdämpfer nach Anspruch 9, wobei der Reservoirzylinder (116) in Fluidkommunikation mit einem Rückprallabschnitt des Zylinders über die Fluidleitung (108) ist.

11. Fahrzeugaufhängungsdämpfer nach Anspruch 9 oder 10, ferner umfassend:
ein aktives Ventil (200b), das mit der Fluidleitung (108) gekoppelt ist,
wobei das aktive Ventil einen Flussweg dort hindurch aufweist,
wobei das aktive Ventil einen Fluss des Arbeitsfluids durch die Fluidleitung misst.

12. Fahrzeugaufhängungsdämpfer nach Anspruch 11, ferner umfassend:
ein Steuersystem (500), das an das aktive Ventil gekoppelt ist, wobei das Steuersystem Folgendes umfasst:
einen Sensor (504, 506, 508), um Fahrzeugbeschleunigungssensordaten assoziiert mit einer Bewegung einer Fahrzeugkomponente des Fahrzeugs zu erhalten;
einen Vergleicher (502), um einen Wert der Fahrzeugbeschleunigungssensordaten mit einem vorbestimmten Beschleunigungsschwellenwert, welcher der Fahrzeugkomponente entspricht, zu vergleichen;
einen aktiven Ventilmonitor, um einen Zustand des aktiven Ventils (200b) zu überwachen, wobei der Zustand eine Dämpfungskraft innerhalb des Fahrzeugaufhängungsdämpfers steuert; und
einen Aktivierungssignalgeber, um basierend auf dem Vergleichen und dem Überwachen das aktive Ventil zu betätigen, um den Fluss des Arbeitsfluids durch die Fluidleitung (108) zu messen, sodass eine Dämpfungseigenschaft des Fahrzeugaufhängungsdämpfers modifiziert wird.

13. Fahrzeug, umfassend einen Fahrzeugaufhängungsdämpfer nach einem vorhergehenden Anspruch.

## Revendications

1. Amortisseur de suspension de véhicule (100) comprenant :
un cylindre et un ensemble piston, dans lequel ledit ensemble piston comprend un piston (130) présentant un premier côté et un second côté, et un trajet d'écoulement formé à travers ledit piston dudit premier côté audit second côté ;
un fluide de travail au sein dudit cylindre ;
un cylindre de dérivation (154) entourant ledit cylindre et définissant un canal de dérivation cylindrique (156) ; et
une valve de dérivation active (102) couplée audit canal de dérivation cylindrique (156), ladite valve de dérivation active étant conçue pour mesurer un écoulement de fluide dudit fluide de travail à travers ledit canal de dérivation cylindrique (156), ladite valve de dérivation active (102) étant conçue pour s'ajuster automatiquement sur la base de caractéristiques du véhicule, telles que la suspension ou une saisie utilisateur reçue ;
**caractérisé en ce que** ledit cylindre comprend un premier orifice de fluide (152) et un second orifice de fluide couplant chacun de manière fluidique un intérieur (124) dudit cylindre et ledit canal de dérivation cylindrique (156), et **en ce que** ledit canal de dérivation cylindrique s'étend entre lesdits premier (152) et second orifices de fluide le long dudit cylindre pour que ledit fluide de travail se déplace dudit premier côté (104) dudit piston (130) audit second côté (134) dudit piston (130) sans traverser un trajet d'écoulement (126A, 126B) formé à travers ledit piston, et **en ce que** ladite valve de dérivation active (102) est conçue pour mesurer un écoulement de dérivation et une fermeture d'amortissement de compression dudit fluide de travail à travers ledit canal de dérivation (156) et pour mesurer un écoulement de dérivation et une fermeture d'amortissement de rebond dudit fluide de travail à travers ledit canal de dérivation (156).

2. Amortisseur de suspension de véhicule selon la revendication 1, dans lequel, lors de l'utilisation, ledit fluide de travail se déplace à travers ledit canal de dérivation cylindrique (156) d'un côté dudit piston (130) à un autre côté dudit piston à un premier débit lorsque ladite valve de dérivation active (102) est dans une position ouverte.

3. Amortisseur de suspension de véhicule selon la revendication 2, dans lequel, lors de l'utilisation, ledit fluide de travail se déplace à travers ledit canal de dérivation cylindrique (156) d'un côté dudit piston (130) à un autre côté dudit piston à un second débit lorsque ladite valve de dérivation active (102) est dans une position partiellement ouverte,
le second débit dudit fluide de travail est inférieur audit premier débit dudit fluide de travail.

4. Amortisseur de suspension de véhicule selon la revendication 1, 2 ou 3, dans lequel, lors de l'utilisation, aucune partie dudit fluide de travail ne se déplace à travers ledit canal de dérivation cylindrique (156) d'un côté dudit piston à un autre côté dudit piston lorsque ladite valve de dérivation active (102) est dans une position fermée.

5. Amortisseur de suspension de véhicule selon la revendication 1, 2, 3 ou 4, dans lequel ledit premier orifice de fluide comprend un orifice de dérivation ajustable couplant de manière fluide (152) un intérieur dudit cylindre et ledit canal de dérivation cylindrique (156) ; et
ladite valve de dérivation active (102) comprend en outre :
un bras d'actionneur (158) ; et
un bouchon fileté (150) couplé audit bras d'actionneur, dans lequel ledit bouchon fileté est conçu pour être déplacé angulairement au sein dudit canal de dérivation cylindrique (156) autour d'un axe longitudinal dudit bouchon fileté (150) par rapport audit piston (130) en réponse à un déplacement angulaire dudit bras d'actionneur (158).

6. Amortisseur de suspension de véhicule selon la revendication 5, dans lequel ladite valve de dérivation active (102) comprend en outre :
une tige (148) disposée de manière adjacente audit bouchon fileté (150), dans lequel ladite tige est conçue pour se déplacer le long dudit axe longitudinal au sein dudit canal de dérivation cylindrique (156) en réponse à un déplacement angulaire subi par ledit bouchon fileté.

7. Amortisseur de suspension de véhicule selon la revendication 6, dans lequel ladite valve de dérivation active (102) comprend en outre :
un manchon (146) couplé à ladite tige (148) et s'étendant à partir de ladite tige le long du même axe longitudinal que ladite tige, dans lequel ledit manchon est conçu pour se déplacer le long dudit axe longitudinal au sein dudit canal de dérivation cylindrique (156) en réponse audit déplacement par ladite tige, dans lequel ledit manchon assure un ajustement à une taille de travail dudit orifice de dérivation ajustable (152).

8. Amortisseur de suspension de véhicule selon une quelconque revendication précédente, comprenant en outre :
un système de commande (500) couplé à ladite valve de dérivation active (102), ledit système de commande comprenant :
un capteur (504, 506, 508) pour obtenir des données de capteur d'accélération de véhicule associées à un mouvement d'un composant de véhicule d'un véhicule ;
un comparateur (502) pour comparer une valeur desdites données de capteur d'accélération de véhicule à une valeur de seuil d'accélération prédéterminée qui correspond audit composant de véhicule ;
un moniteur de valve de dérivation active pour surveiller un état de ladite valve de dérivation active (102), dans lequel ledit état commande une force d'amortissement au sein dudit amortisseur de suspension de véhicule ; et
un fournisseur de signal d'activation pour, sur la base de ladite comparaison et de ladite surveillance, actionner ladite valve de dérivation active (102) pour mesurer l'écoulement dudit fluide de travail à travers ledit canal de dérivation cylindrique (156), de sorte qu'une caractéristique d'amortissement dudit amortisseur de suspension de véhicule (100) soit modifiée.

9. Amortisseur de suspension de véhicule selon une quelconque revendication précédente, comprenant en outre :
un conduit de fluide (108) ; et
un cylindre réservoir (116) en communication fluidique avec le cylindre par l'intermédiaire du conduit de fluide (108), le cylindre réservoir étant destiné à recevoir et à fournir le fluide de travail lorsque l'ensemble piston entre et sort du cylindre.

10. Amortisseur de suspension de véhicule selon la revendication 9, dans lequel le cylindre de réservoir (116) est en communication fluidique avec une partie de rebond du cylindre par l'intermédiaire du conduit de fluide (108).

11. Amortisseur de suspension de véhicule selon la revendication 9 ou 10, comprenant en outre :
une valve active (200b) couplée audit conduit de fluide (108),
la valve active présentant un trajet d'écoulement à travers celle-ci,
la valve active étant destinée à mesurer un écoulement dudit fluide de travail à travers ledit conduit de fluide.

12. Amortisseur de suspension de véhicule selon la revendication 11, comprenant en outre :
un système de commande (500) couplé à ladite valve active, ledit système de commande comprenant :
un capteur (504, 506, 508) pour obtenir des données de capteur d'accélération de véhicule associées à un mouvement d'un composant de véhicule dudit véhicule ;
un comparateur (502) pour comparer une valeur desdites données de capteur d'accélération de véhicule à une valeur de seuil d'accélération prédéterminée qui correspond audit composant de véhicule ;
un moniteur de valve active pour surveiller un état de ladite valve active (200b), dans lequel ledit état commande une force d'amortissement au sein dudit amortisseur de suspension de véhicule ; et
un fournisseur de signal d'activation pour, sur la base de ladite comparaison et de ladite surveillance, actionner ladite valve active pour mesurer l'écoulement dudit fluide de travail à travers ledit conduit de fluide (108), de sorte qu'une caractéristique d'amortissement dudit amortisseur de suspension de véhicule soit modifiée.

13. Véhicule comprenant un amortisseur de suspension de véhicule selon une quelconque revendication précédente.
